# EUROPÄISCHE PATENTANMELDUNG

(11) **EP 2 251 071 A1**
(43) Veröffentlichungstag der Anmeldung: **17.11.2010**
(21) Anmeldenummer: 10004909.7
(22) Anmeldetag: 10.05.2010
(51) Int. Cl.: B01D 24/46, B01D 36/04, B01D 21/00, E04H 4/12

(54) **Rückhaltesystem für Wasser-Schlammgemische bei Rückspülprozessen an Filteranlagen**

(30) Priorität: 11.05.2009 DE 102009020736
(71) Anmelder: Bräutigam Kunststoffsysteme GmbH, 07987 Mohlsdorf (DE)
(72) Erfinder: Bräutigam, Roland, 08412 Werdau (DE)
(74) Vertreter: Auerbach, Bettina

(57) **Zusammenfassung**

Die Erfindung betrifft ein System zur Rückhaltung von Filter-Rückspülwasser beim Rückspülen von Filteranlagen in Pools, Freibädern, Hallenbädern, Schwimmteich- und Gartenteichen, Aquarien, Regenwassersammlern und ähnlichem. Dabei wird an die Ablaufleitung eines Filters ein so genannter Sedimentationsbehälter angeschlossen. Das beim Rückspülen eines Filters anfallende Wasser-Schmutz-Gemisch wird über die Ablaufleitung des Filters in den Sedimentationsbehälter abgeleitet und dort gesammelt. Der Sedimentationsbehälter ist so dimensioniert, dass das gesamte Filter-Rückspülvolumen aufgefangen werden kann. Nach dem Rückspülvorgang wird der Filter wieder auf normalen Filterbetrieb umgeschaltet. Der Schmutzanteil setzt sich im Sedimentationsbehälter ab. Somit entsteht eine über dem abgesetzten Schmutz stehende Klarwasserzone im Sedimentationsbehälter. Dieses Klarwasser wird dem Gebrauchswasser der Gesamtanlage wieder zugeführt. Der Abzugsanschluss des Klarwassers ist in seiner Höhe so über dem Boden angeordnet, dass gewährleistet wird, den Schmutz im Sedimentationsbehälter zurück zu halten.

## Beschreibung

Die Erfindung betrifft ein System zur Rückhaltung von Filter-Rückspülwasser beim Rückspülen von Filteranlagen in Pools, Freibädern, Hallenbädern, Schwimmteich- und Gartenteichen, Aquarien, Regenwassersammlern und ähnlichem.

Verbreitet und dem Stand der Technik entsprechend werden für die Wasseraufbereitung von Schwimmbadwasser, Teichwasser oder Trinkwasser sowie Regenwasser Filteranlagen mit Füllungen aus Kies-, Sand-, AFM,- oder anderen Filtermaterialien verwendet. Die Filter dienen dem Zurückhalten und Ausfiltrieren von Schwebstoffen aus dem Wasser und werden in unterschiedlichster Form sowie Größe eingesetzt.

Der jeweils eingesetzte Filtertyp ist abhängig von der Wasserart und den anfallenden zu filternden Stoffen.

Allen Filteranlagen liegt ein ähnliches Wirkprinzip vor. Die Filter werden mit dem zu filternden Wasser durchflutet. Das Filtermaterial hält bzw. filtert Schmutz, Schwebstoffe, Haare, Kleinteilchen und andere im Wasser befindliche Inhaltsstoffe während dem Durchlauf durch den Filter aus, indem diese Teilchen in den Filtermaterial-Lücken gesammelt werden.
Der Abfluss des Wassers aus dem Filter wird durch den Einsatz von so genannten Filterdüsen gewährleistet, die meist mit Schlitzen unterschiedlicher Schlitzweite versehen sind und nur das Wasser an sich sowie Teilchen kleiner der Schlitzweite aus dem Filter abfließen lassen.
Somit werden das Filtermaterial und die Filtrationsstoffe im Filter zurückgehalten.

Jeder Filter, egal mit welchem eingesetzten Filtermaterial ist irgendwann so mit Filtrationsstoffen im Filtermaterial gesättigt, dass kaum noch oder nur sehr geringe Mengen Wasser den Filter durchlaufen können. Man spricht gebräuchlich dann von einem zugesetzten Filter oder sagt einfach, der Filter ist zu.

Filteranlagen werden mit unterschiedlichen Betriebsdrücken betrieben, die über wiederum unterschiedliche Druck-Anzeigesysteme überwacht werden können. Der angezeigte Druck im Filter lässt dabei Rückschlüsse über den Betriebszustand eines Filters erfahren. In allen Filtern zeigt ein erhöhter Betriebsdruck einen erhöhten Zusetzungsgrad des Filters an.
Wird ein bestimmter Wert erreicht, muss der Filter gereinigt bzw. Rückgespült werden.

Werden Filter durch Rückspülen gereinigt, wird mittels umschaltbarer Ventile im einfachsten Fall ein Wechsel von Zulauf und Auslauf zum bzw. vom Filter vollzogen.
Je nach Typ, Aufbauart und Einsatzfall von Filtern kann auch Druckluft zum Lockern des Filterbettes unterstützend verwendet werden.
Somit wird das Filtermaterial in umgekehrter Folge durchflutet, dabei aufgewirbelt und die Filtrationsstoffe mit dem so genannten Rückspülwasser aus dem Filter ausgetragen.

Das aus dem Filter ausgetragene Rückspülwasser ist ein Wasser-Schmutz-Gemisch und wird in ausnahmslos allen Fällen in Abwasserleitungen entsorgt bzw. Abwassersammlern zugeführt und so der weiteren Nutzung der Gewässeranlage entzogen.

Zum Ausgleich des Wasserverlustes, der durch den Rückspülvorgang eines Filters verursacht wird ist somit immer die Notwendigkeit der Zuleitung von Frischwasser zur Wasseranlage angezeigt.

Die benötigte Wassermenge zum Rückspülen eines Filters ist abhängig vom Zusetzungsgrad, dem eingesetzten Filtermaterial und dem Filtertyp. Grundsätzlich wird jedoch mindestens das 2-fache Filterinhaltsvolumen in den meisten Fällen jedoch ein Vielfaches des Filtervolumens notwendig.

Aus diesem Grund werden meistens größere Filter als eigentlich notwendig zum Einsatz gebracht, die einen sehr langen Betrieb ohne Rückspülen gewährleisten können. Jedoch ist auch in diesen Fällen das Rückspülen dann eben mit noch größerem Bedarf an Rückspülwasser verbunden.

Der Erfindung liegt deshalb die Aufgabe zu Grunde eine technische Lösung zu schaffen, mit deren Hilfe die Mängel des bekannten Standes der Technik überwunden werden können. Insbesondere soll eine einfache, kostengünstige und praxisnahe Lösung zum Speichern und Wiederverwenden des Rückspülwassers aus Filtern realisiert werden.

Erfindungsgemäß wird die Aufgabe im Wesentlichen durch die Merkmale des Anspruches 1 gelöst. Die vorteilhaften Ausgestaltungen sind in den Unteransprüchen beschrieben.
Dabei wird an die Ablaufleitung eines Filters ein so genannter Sedimentationsbehälter angeschlossen. Das beim Rückspülen eines Filters anfallende Wasser-Schmutz-Gemisch wird über die Ablaufleitung des Filters in den Sedimentationsbehälter abgeleitet und dort gesammelt. Der Sedimentationsbehälter ist so dimensioniert, dass das gesamte Filter-Rückspülvolumen aufgefangen werden kann. Nach dem Rückspülvorgang wird der Filter wieder auf normalen Filterbetrieb umgeschaltet. Der Schmutzanteil des im Sedimentationsbehälter gesammelten Wasser-Schmutz-Gemisch setzt sich über einen bestimmten Zeitraum hinweg auf dem Boden des Sedimentationsbehälters ab. Somit entsteht eine über dem abgesetzten Schmutz stehende Klarwasserzone im Sedimentationsbehälter. Dieses Klarwasser wird dem Gebrauchswasser der Gesamtanlage über einen Anschluss zur Pumpe wieder zugeführt. Der Abzugsanschluss des Klarwassers am Sedimentationsbehälter ist in seiner Höhe so über dem Boden angeordnet und mit einer Abscheidearmatur versehen, dass gewährleistet wird, den Schmutz im Sedimentationsbehälter zurück zu halten.
Nach dem Klarwasserabzug kann ein erneutes Rückspülen des Filters erfolgen. Dieser Vorgang kann so oft erfolgen, bis eine festzulegende Menge an abgesetztem Schmutz im Sedimentationsbehälter angesammelt ist. Der gesammelte Schmutz wird nach dem Abzug von Klarwasser über einen Schlammabzugsanschluss in einen Abfluss geleitet.

Mit dem erfindungsgemäßen Einsatz von Sedimentationsbehälters zum wieder Verwenden von Rückspülwasser in Filteranlagen von Pools, Freibädern, Hallenbädern, Schwimmteich- und Gartenteichen, Aquarien, Regenwassersammlern und ähnlichem können wesentlich kleinere Filter eingesetzt werden.

Die Rückspülinterwalle von Filtern können so optimiert werden, dass die Filter immer ihr volles Leistungsvermögen beibehalten, sich in den Filtern keine anaeroben Prozesse bilden können. Der Verlust von Wasser durch das Rückspülen auf ein vernachlässigbares Minimum vermindert wird.

Die Erfindung soll nachstehend an einem Ausführungsbeispiel erläutert werden.
In der beigefügten Zeichnung zeigen:
- Fig. 1: eine schematische Schnittdarstellung eines erfindungsgemäßen Rückhaltesystem eines Wasser-Schlammgemisches aus einem Rückspülprozess einer Filteranlage und
- Fig. 2: eine schematische 3D-Darstellung eines erfindungsgemäßen Rückhaltesystem eines Wasser-Schlammgemisches aus einem Rückspülprozess einer Filteranlage.

### Ausführungsbeispiel:

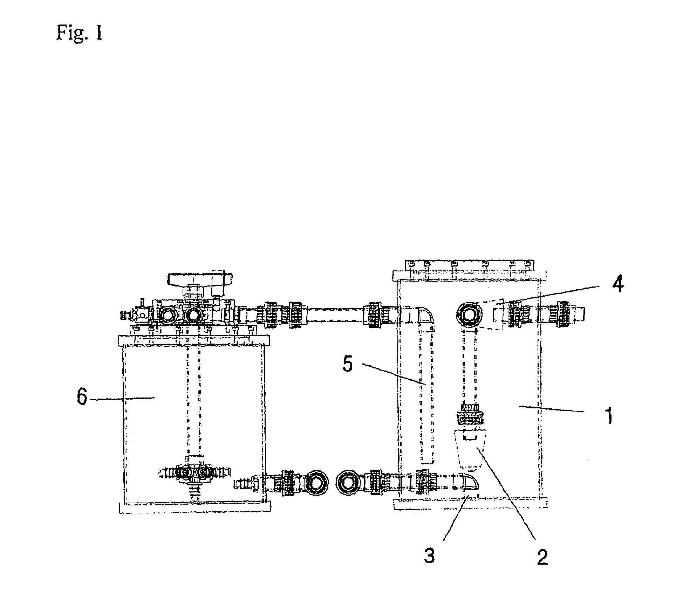

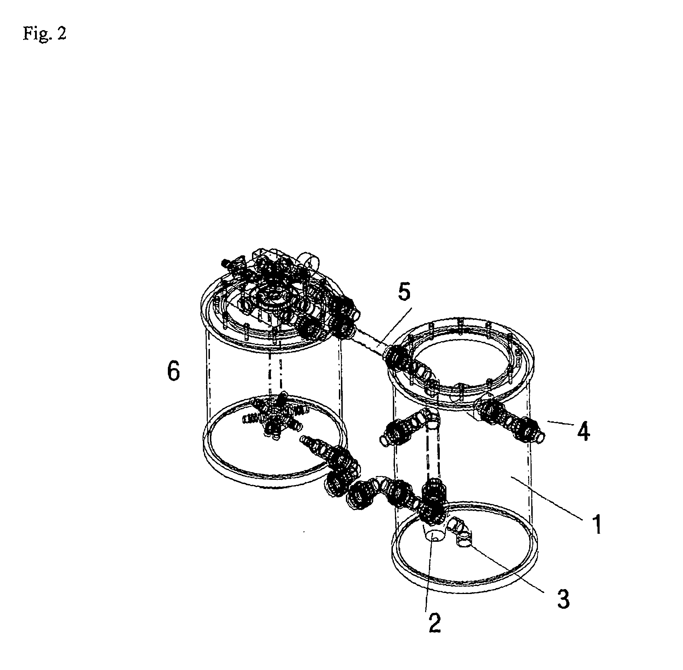

Gemäß der Figuren 1 und 2 besteht ein System zur Rückhaltung von Filter-Rückspülwasser beim Rückspülen von Filteranlagen in Pools, Freibädern, Hallenbädern, Schwimmteich- und Gartenteichen, Aquarien,
Regenwassersammlern und ähnlichem zunächst aus einem Sedimentationsbehälter 1, welcher über Rückspülwasser-Ablaufleitung 5 mit einem vorhandenen Filter 6 verbunden ist. Über diese Rückspülwasser-Ablaufleitung 5 des Filters 6 gelangt das Rückspülwasser des Filters 6 beim Rückspülen des Filters 6 in den Sedimentationsbehälter 1.
Der Sedimentationsbehälter 1 ist von seiner Baugröße so dimensioniert, dass er das gesamte Rückspülwasser des Filters 6 oder auch mehrerer Filter 6 aufnehmen kann.
Die Schwebstoffe und Schmutzanteile des Filter-Rückspülwassers setzen sich im Sedimentationsbehälter im Bereich des Bodens ab. Es entsteht oberhalb dieser Absetzzone eine Klarwasserzone im Sedimentationsbehälter 1.
Im Bereich dieser Klarwasserzone ist im Inneres des Sedimentationsbehälters 1 wenigstens ein Klarwasserabzug 2 angeordnet. Über den Klarwasserabzug 2 wird das Klarwasser aus dem Sedimentationsbehälter 1 in den Filter 6 oder dem zu reinigenden Wasser zurückgeführt und steht somit dem Kreislauf in gereinigter Form weiter zur Verfügung. Für diese Maßnahme ist der Klarwasserabzug 2 mit einer Pumpe (? ) verbunden. Mit dieser Maßnahme kann das Klarwasser aus dem Sedimentationsbehälter 1 über den Filter 6 für den Prozess wieder zur Verfügung gestellt werden. Es wird verhindert, dass bereits aufbereitetes Wasser in ein Abfluss- bzw. Entsorgungssystem zur Nachbehandlung bzw. Entsorgung abgeführt wird, sondern dem zu reinigenden Wasser in aufbereiteter Form wieder zur Verfügung gestellt wird.
Im Bereich des Sedimentationsbehälter-Bodens sind ein oder mehrere Schlammabzüge 3 angeordnet. Nach dem Rückführen des Klarwassers aus dem Sedimentationsbehälter 1 zum Filter 6 wird der Schlamm abgezogen und einem Entsorgungssystem zugeführt, wo er auch einer Weiterverwendung zur Verfügung gestellt werden kann. Das Abziehen des abgesetzten Schmutzes im Sedimentationsbehälter 1 muß nicht nach jedem Klarwasserabzug erfolgen, sondern kann durch geeignete voreinstellbarer Maßnahmen (Zwischenschaltung eines Zählwerkes oder eines Sensors zur Ermittlung der Klarwassertrübung oder dergleichen) erst nach Ablauf mehrerer Klarwasserabzüge erfolgen.
Die im oberen Bereich des Sedimentationsbehälters 1 in der Klarwasserzone angeordneten Überläufe 4 dienen als Sicherheitssystem und dem kontrollierten Abführen des Klarwassers im Bedarfsfall.
Auf Grund der Rückführung des Klarwassers aus dem Sedimentationsbehälters in das Filtersystem kommt es durch diese Lösung zur Verbesserung der Effizienz des Filtersystems. Der Rückspülprozess des Filters kann so oft als möglich durchgeführt werden, so dass auch das Filtersystem selbst vor einem unerwünschten Zusetzen geschützt ist und der Wartungsaufwand auf eine Minimum reduziert werden kann. Auf Grund dieser möglichen Maßnahmen bleibt der Filter immer sauber und damit immeraktiv. Die erfindungsgemäße Lösung ist konstruktiv einfach, sehr effektiv und dennoch kostengünstig und trägt zum sorgsamen Umgang mit der Ressource Wasser bei.

### Rückhaltesystem für Wasser - Schlammgemische bei Rückspülprozessen an Filteranlage

### Bezugszeichenliste

1 Sedimentationsbehälter
2 Klarwasserabzüge
3 Schlammabzüge
4 Überläufe
5 Rückspülwasserzulauf
6 Filter

## Patentansprüche

1. Rückhaltesystem für Wasser - Schlammgemische bei Rückspülprozessen an Filteranlagen **dadurch gekennzeichnet, dass** ein Sedimentationsbehälter ( 1 ) an die Ablaufleitung eines Filters ( 6 ) angeschlossen ist.

2. Rückhaltesystem für Wasser - Schlammgemische bei Rückspülprozessen an Filteranlagen nach Anspruch 1 **dadurch gekennzeichnet, dass** der Sedimentationsbehälter ( 1 ) mit einem oder mehreren in verschiedenen Höhen angeordneten Klarwasserabzügen ( 2 ) , einem oder mehreren am Boden des Sedimentationsbehälters ( 1 ) angeordneten Schlammabzügen ( 3 ), einem oder mehreren Überläufen ( 4 ), sowie mit einer oder mehreren Rückspülzuläufen ( 5 ) ausgerüstet ist.

3. Rückhaltesystem für Wasser - Schlammgemische bei Rückspülprozessen an Filteranlagen nach Anspruch 1 und 2 **dadurch gekennzeichnet, dass** der Klarwasserabzug ( 2 ) des Sedimentationsbehälters ( 1 ) an eine Pumpe angeschlossen ist, die in das abgezogene Klarwasser wieder zum Gesamtwasser der Anlage zurückführt.

4. Rückhaltesystem für Wasser - Schlammgemische bei Rückspülprozessen an Filteranlagen nach Anspruch 1 bis 3 **dadurch gekennzeichnet, dass** der Überlauf ( 4 ) des Sedimentationsbehälters ( 1 ) außerhalb mit dem Schlammabzug ( 3 ) verbunden ist.

5. Rückhaltesystem für Wasser - Schlammgemische bei Rückspülprozessen an Filteranlagen nach Anspruch 1 bis 4 **dadurch gekennzeichnet, dass** die Ablaufleitungen mehrerer Filter ( 6 ) in einem Sedimentationsbehälter ( 1 ) angeschlossen sind.
